(19) **Europäisches Patentamt / European Patent Office / Office européen des brevets**

(11) **EP 1 912 304 B1**

(12) **EUROPEAN PATENT SPECIFICATION**

(45) Date of publication and mention of the grant of the patent:
**02.04.2014   Bulletin 2014/14**

(51) Int Cl.:
*H02J 3/14* *(2006.01)*       *H02J 3/24* *(2006.01)*

(21) Application number: **07112705.4**

(22) Date of filing: **18.07.2007**

(54) **Method for voltage instability load shedding using local measurements**

Verfahren zur Lastensteuerung bei Spannungsinstabilität über lokale Messungen

Procédé de délestage d'instabilité de tension en utilisant des mesures locales

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **09.10.2006   US 539758**

(43) Date of publication of application:
**16.04.2008   Bulletin 2008/16**

(73) Proprietor: **Electric Power Research Institute, Inc. Charlotte, NC 28262-7097 (US)**

(72) Inventors:
• **Zhang, Pei**
  **Campbell, CA 95051 (US)**

• **Min, Liang**
  **Santa Clara, CA 95051 (US)**
• **Zhang, Nan**
  **Santa Clara, CA 95051 (US)**

(74) Representative: **Instone, Terry**
**Appleyard Lees**
**15 Clare Road**
**Halifax HX1 2HY (GB)**

(56) References cited:
**EP-A1- 1 217 709      EP-A2- 0 445 713**
**US-B1- 6 219 591**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field and Background of the Invention

This invention relates to a method of determining voltage stability margin at local bus level and to applying the method to enhance under-voltage load shedding protection scheme. We named this new protection scheme as "voltage instability load shedding".

Under Voltage Load Shedding (UVLS) has been used as an economic means of avoiding voltage collapse. Since load shedding results in high costs to electricity suppliers and consumers, this option is only used when all other means of avoiding voltage collapse are exhausted. UVLS sheds load in predefined blocks that are triggered in stages when local voltage drops to the predefined levels.

In most UVLS schemes, voltage magnitude is the only triggering criterion. However, past research has demonstrated that voltage magnitude alone is not a satisfactory indicator of the proximity to voltage instability under all circumstances. In fact, voltage stability is determined by the ability of the power system to supply and deliver reactive power. In actual systems, the computation of actual system PV curves may be very complicated due to the large number of generators, widespread applications of capacitor banks, uncertainty about the dynamic characteristics of system loads, and the variability of power flow pattern. In addition, operation of under load tap changers, the actual dynamic reactive capability of generators and accurate reactive reserve all affect the ability of the system to supply and deliver the reactive power. Therefore, determination of proper settings for UVLS schemes becomes a challenging task for system planners.

Moreover, modeling uncertainties post more challenges for system planners to determine the proper settings for UVLS schemes. Current settings of UVLS are determined by system planning engineers through extensive network analyses using computer simulation packages. However, simulated system behaviors do not usually coincide with actual measured system responses due to data and modeling issues. Inappropriate settings can result in unnecessary shedding or failure to detect the need for load shedding.

US 6,219,591 discloses a Voltage Instability Predictor (VIP) which estimates the proximity of a power system to voltage collapse in real time. The VIP can be implemented in a microprocessor-based relay whose settings are changed adaptively to reflect system changes. Only local measurements (voltage and current) at the bus terminal are required. The VIP detects proximity to collapse by monitoring the relationship between the apparent impedance and the Thevenin-impedance circle.

EP-A-0 445 713 discloses an electric power system simulator comprising first calculator which calculates a generator dynamic characteristic, second calculator which calculates a load dynamic characteristic and third calculator which calculates power transmission condition of an electric power system network, then the first calculator cyclically obtains an amplitude and a phase of an internal induced voltage of the generator based on data on an output power and a terminal voltage of the generator, and the second calculator calculates a load equivalent admittance at predetermined time based on data on an A.C.; voltage at a load installation point, and the third calculator calculates a current flowing in each element of the electric power system based on respective data obtained by the first calculator and the second calculator and an electric power system network impedance to obtain the output power and terminal voltage of the generator, so that a condition change of the electric power system including the generators is serially simulated by alternately executing the calculations of the first and the second calculators and the calculation of the third calculator.

EP-A-1 217 709 discloses a method and devices for assessing the stability of an electric power network, for each of a plurality of measurement locations with associated voltage and current measurements. A normalized power margin value dSn is computed, which is defined as a result of dividing an associated power margin value by an associated maximum allowable power flow. In a preferred embodiment, the normalised power margin value dSn is computed from an apparent load impedance Za and a Thévenin impedance Zt, that are perceived from the measurement location, using dSn = $[(Za-Zt)/(Za+Zt)]^2$. Normalised power margin values from several measurement locations in the network show power margins relative to a local maximum capacity, which makes them comparable to one another.

Summary of the Invention

A new control method referred to as "Voltage Instability Load Shedding" (VILS) is disclosed in this application. This new control method can enhance the conventional UVLS at designated locations, such as major load centers. This smart control scheme computes Voltage Stability Margin Index (VSMI) continuously to track the voltage stability margin at local bus level. The VSMI is expressed as active, reactive, and apparent power. The VSMI is used as an adaptive triggering criterion for load shedding.

This VILS method comprises the steps of, or means for, measuring current and voltage waveforms at the local load bus, therefrom estimating Thevenin equivalent admittance (Y), then calculating the VSMI, and finally comparing the VSMI with the pre-set threshold to decide whether to initiate a load shedding action.

Therefore, it is an object of the invention to provide a new load shedding strategy subject to voltage instability.

It is another object of the invention to provide a new method of estimating voltage stability margin at local bus level.

It is another object of the invention to express the voltage stability margin in terms of real, reactive and apparent power.

These objects are solved by the features of claim 1. The dependent claims recite advantageous details of the method.

Brief Description of the Drawings

Some of the objects of the invention have been set forth above. Other objects and advantages of the invention will appear as the description proceeds when taken in conjunction with the following drawings, in which:

Figure 1 depicts the Thevenin equivalent system;
Figure 2 depicts an exemplary graph where tracking closeness to voltage instability becomes tracking the distance of the current load level to maximum power transfer in terms of voltage stability limit; and
Figure 3 depicts a flowchart of the operation of a VILS system.

Description of the Preferred Embodiment and Best Mode

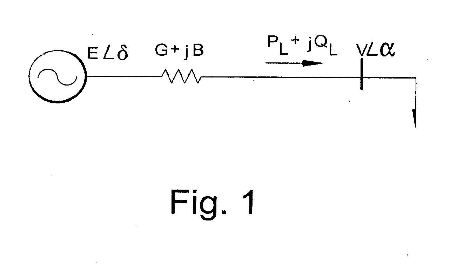

Referring now to Figure 1, the real and reactive power transferred from the system to the load is

$$\begin{cases} P_L = EVY\cos(\alpha - \delta - \beta) - V^2 G \\ Q_L = EVY\sin(\alpha - \delta - \beta) + V^2 B \end{cases} \qquad (1)$$

Where $Y$ is the magnitude and $\beta$ is the angle of the Thevenin equivalent admittance $G + jB$

Dividing $E^2 Y$ on both sides of Equation (1), it can be reformulated as:

$$\begin{cases} p = v\cos(\alpha - \delta - \beta) - v^2 \cos\beta \\ q = v\sin(\alpha - \delta - \beta) + v^2 \sin\beta \end{cases} \qquad (2)$$

where $p = \dfrac{P_L}{E^2 Y}, q = \dfrac{Q_L}{E^2 Y}, v = \dfrac{V}{E}$

Moving $v^2\cos\beta$ and $v^2\sin\beta$ to the left sides and taking the square of the right and left sides and adding, the following equation is obtained:

$$(p + v^2\cos\beta)^2 + (q - v^2\sin\beta)^2 = v^2 \qquad (3)$$

Substitute $q$ with $p\cdot\tan\phi$, where $\phi$ is the power factor of load. From equation (3) is obtained:

$$p = -v^2\cos\phi\cos(\phi + \beta) + \cos\phi\sqrt{v^2 - v^4\sin^2(\phi + \beta)} \qquad (4)$$

Taking the derivative and setting it equal to zero, the normalized critical voltage and maximum power is obtained:

$$\frac{\partial p}{\partial v} = 1 - 4v^2 + 4v^4\sin^2(\phi + \beta) = 0 \qquad (5)$$

$$v_{critical}{}^2 = \frac{1 - \cos(\phi + \beta)}{2 \sin^2(\phi + \beta)} = \frac{1}{2[1 + \cos(\phi + \beta)]} \qquad (6)$$

$$p_{max} = \frac{\cos\phi}{2[1 + \cos(\phi + \beta)]} \qquad (7)$$

The maximum active and reactive transfer power is expressed as:

$$P_{max} = E^2 Y \cdot p_{max} = V^2 Y \cos\phi$$
$$Q_{max} = E^2 Y \cdot Q_{max} = V^2 Y \sin\phi \qquad (8)$$

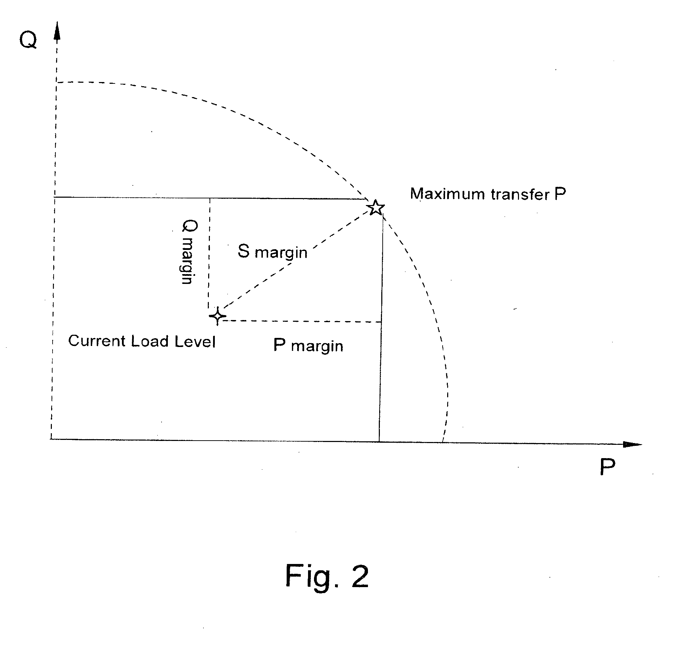

Therefore, as is shown in Figure 2, tracking closeness to voltage instability becomes tracking the distance of the current load level to maximum power transfer. The VSMI expressed by equation (9 - 11) provides voltage stability margin in terms of the apparent, active and reactive power.
Voltage stability margin in terms of active power:

$$P_{Margin} = P_{max} - P_L \qquad (9)$$

Voltage stability margin in terms of reactive power

$$Q_{Margin} = Q_{max} - Q_L \qquad (10)$$

Voltage stability margin in terms of apparent power

$$S_{Margin} = \sqrt{P_{max}^2 + Q_{max}^2} - S_L \qquad (11)$$

The closer the VSMI are to zero, the more imminent is the system to voltage instability. VSMI also indicates how much load needs to be shed in order to prevent voltage instability.
In Equations (9-11), $P_L$ and $Q_L$ can be calculated using the local measurements of voltage and current samples, while the Thevenin Equivalent admittance Y in (8) must be estimated. An estimation method using Kalman Filter is therefore developed.
The estimation equation is:

$$\hat{z} = H\hat{x} + \hat{v} \qquad (12)$$

where $\hat{z}$ is the measurement vector. $\hat{x}$ is the state vector to be estimated, $H$ is the observation model, and $\hat{v}$ is the observation noise.
To minimize the estimation error, we are trying to minimize a cost function that

$$\bar{J} = \frac{1}{2}(\hat{z} - H\hat{x})^T(\hat{z} - H\hat{x}) \qquad (13)$$

The criterion to minimize the *J* is that its derivative equals to zero

$$\frac{\partial J}{\partial \hat{x}} = -(\hat{z} - H\hat{x})^T H = 0 \qquad (14)$$

At that time the estimation of $\hat{x}$ is given as

$$\hat{x}_{est} = (H^T H)^{-1} H^T \hat{z} \qquad (15)$$

Now deriving a recursive equation to estimate the $\hat{x}$. Let *P* is the covariance of the error in the estimator as:

$$
\begin{aligned}
P &= E\left[\tilde{x}_{est}\,\tilde{x}_{est}^{\;T}\right] \\
&= (H^T H)^{-1} H^T R H (H^T H)^{-1} \\
&= (H^T R^{-1} H)^{-1}
\end{aligned}
\qquad (16)
$$

where $\tilde{x}_{est} = x\text{-}\hat{x}_{est}$, and R is the covariance matrix of measurement error.

Represent equation (17) using the discrete measured values

$$
\begin{aligned}
P_n &= (\sum_{i=1}^{n} H_i^T R_i^{-1} H_i)^{-1} \\
&= (\sum_{i=1}^{n-1} H_i^T R_i^{-1} H_i + H_n^T R_n^{-1} H_n)^{-1} \\
&= (P_{n-1}^{-1} + H_n^T R_n^{-1} H_n)^{-1}
\end{aligned}
\qquad (17)
$$

Equation (15) at time instant *n* is written as:

$$
\begin{aligned}
\hat{x}_n &= (\sum_{i=1}^{n} H_i^T R_i^{-1} H_i)^{-1}(\sum_{i=1}^{n} H_i^T R_i^{-1} z_i) \\
&= P_n\left[\sum_{i=1}^{n-1} H_i^T R_i^{-1} z_i + H_n^T R_n^{-1} z_n\right] \\
&= P_n(P_{n-1}^{-1}\hat{x}_{n-1} + H_n^T R_n^{-1} z_n)
\end{aligned}
\qquad (18)
$$

Define

$$K_n = P_n H_n^T R_n^{-1} \qquad (19)$$

Then equation (18) would be

$$\hat{x}_n = P_n P_{n-1}^{-1}\hat{x}_{n-1} + K_n \hat{z}_n \qquad (20)$$

Since

$$P_n P_{n-1}^{-1} = I - K_n H_n \qquad (21)$$

Then, the recursive equation to estimate $\hat{x}_n$ is

$$\hat{x}_n = \hat{x}_{n-1} + K_n [z_n - H_n \hat{x}_{n-1}] \qquad (22)$$

Now apply the above method in the load shedding problem. From Fig.1

$$E - jY^{-l}I = V \qquad (23)$$

where E is the Thevenin equivalent generator terminal voltage; V is the local load bus voltage; I is the line current; and Y is the Thevenin equivalent admittance.
V and I can be measured at local bus.
Denote $E = E_r + jE_i, V = m + jn, I = p + jq, Z = 1/Y = R + jX$.
Then, in accordance with equation (12):

$$\hat{z} = \begin{bmatrix} m \\ n \end{bmatrix} \qquad (24)$$

$$H = \begin{bmatrix} 1 & 0 & -p & q \\ 0 & 1 & -q & -p \end{bmatrix} \qquad (25)$$

$$\hat{x} = \begin{bmatrix} E_r \\ E_i \\ R \\ X \end{bmatrix} \qquad (26)$$

When applying the recursive equation (22), several parameters need to be initialized. According to the preferred embodiment:

the initial value of $\hat{x}$ is set based on the power flow solution;
the covariance matrix of measurement error $R$, is set according to the standard deviation of the measurement device, which reflects the expected accuracy of the corresponding meter used;
$P$ is the covariance matrix of the estimator error. The initial value of P is set as a diagonal matrix with the element value equal to 0.000001.

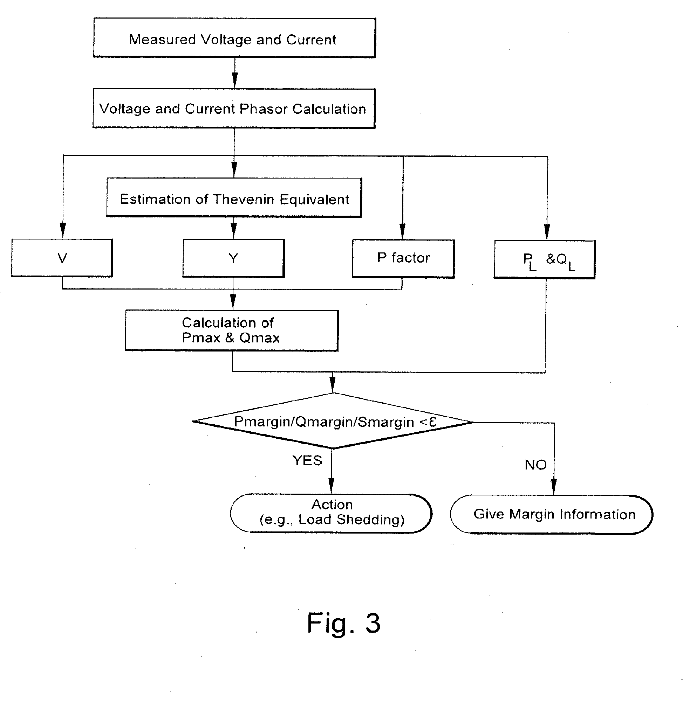

The estimation method uses a sliding data window with four samples per window. The estimation of the Thevenin admittance is conducted continuously. Preferably, the sampling time step is set as 0.01 s or 1 cycle based on 60Hz. This sampling rate is determined based on the considerations of obtaining accurate estimation value of the Thevenin admittance and having enough time to detect a fault in order to block the load shedding function during the fault.
Referring now to the flowchart shown in Fig. 3, the proposed VILS method is summarized. In Figure 3, $\varepsilon \geq 0$ represents a mismatch margin that is set by the user.
The voltage and current samples are measured directly at local bus. With those samples, the active power of local load ($P_L$) and reactive power of local load ($Q_L$) can be calculated and the Thevenin admittance Y can be estimated using the Kalman Filter estimation method described earlier. Then, voltage stability margin in terms of active power, reactive power and apparent power is calculated using (9~11). This margin, then, compared with the user set mismatch margin, ε to determine whether load shedding should be taken.

Variations and modifications are possible within the scope of the appended claims.

## Claims

1. A method of voltage instability load shedding, comprising the steps of:

   measuring current and voltage waveforms of an electrical system at a local system bus;
   estimating the Thevenin equivalent admittance (Y) based on Kalman filter techniques;
   calculating a voltage stability margin index using the magnitude of the voltage wave form, the determined Thevenin admittance, and the load at the local system bus;
   comparing the calculated voltage stability margin index with a predetermined threshold value; and
   utilizing the comparison between the calculated voltage stability margin index with the predetermined threshold value to determine whether to initiate a load shedding action;
   **characterized in that**:

   a real power parameter $p = \dfrac{P_L}{E^2 Y}$ (4), is derived, where $P_L$ is the real power transferred from the electrical system to the load, E is the Thevenin equivalent generator terminal voltage,
   the partial derivative of p is taken with respect to v = (V/E) (5), where V is the local load bus voltage, to obtain a normalized maximum real power $p_{max}$(7),
   the maximum active transfer power is calculated as $P_{max} = E^2 Y \cdot p_{max}$(8), and
   the voltage stability margin index in terms of active power is derived as $P_{Margin} = P_{max} - P_L$ (9), and/or

   a reactive power parameter $q = \dfrac{Q_L}{E^2 Y}$ (2), is derived, where $Q_L$ is the reactive power transferred from the electrical system to the load,
   the partial derivative of q is taken with respect to $v$ = (V/E), where V is the local load bus voltage, to obtain a normalized maximum reactive power $q_{max}$,
   the maximum reactive transfer power is calculated as $Q_{max} = E^2 Y \cdot q_{max}$ (8), and
   the voltage stability margin index in terms of reactive power is derived as $Q_{Margin} = Q_{max} - Q_L$ (10).

2. The method of claim 2 wherein a voltage stability margin index in terms of apparent power S is derived as $S_{Margin} = \sqrt{P_{max}^2 + Q_{max}^2} - S_L$ (11), wherein $S_L$ is the apparent power transferred from the electrical system to the load.

3. A method of voltage instability load shedding according to claim 1 or claim 2, wherein the Thevenin admittance is estimated based on the equation: $\hat{z} = H\hat{x} + \hat{v}$ where $\hat{z}$ is a measurement vector, $\hat{x}$ is a state vector to be estimated, H is an observation model, $\hat{v}$ is an observation noise.

4. A method of voltage instability load shedding according to claim 3 and including the step wherein the initial value $\hat{x}$ is set based on a power flow solution, a covariance matrix of measurement error R set according to the accuracy of the measurement device, and the initial value of the covariance of the estimation error $P$ set as a diagonal matrix with the element value equal to 0.000001.

5. A method of voltage instability load shedding according to claim 3, wherein the estimation of the Thevenin admittance is conducted continuously and the Kalman filter estimation method uses a sliding data window with four samples per window:

6. A method of voltage instability load shedding according to claim 3, wherein the sampling time step is set as 1 cycle, based on 60Hz.

7. A method of voltage instability load shedding according to claim 3, wherein the sampling rate is determined based on the estimation value of the Thevenin admittance with sufficient time to detect a fault in order to block the load shedding function during the fault.

8. A method of voltage instability load shedding according to claim 2, wherein the voltage stability margin is expressed in terms of an apparent, active and reactive power.


**Patentansprüche**

1. Verfahren zum Lastabwurf bei Spannungsinstabilität, das die folgenden Schritte umfasst:

Messen von Strom- und Spannungssignalformen eines elektrischen Systems an einem lokalen Systembus;
Abschätzen des Scheinleitwerts (Y) des Thevenin-Äquivalents auf der Grundlage von Kalman-Filtertechniken;
Berechnen eines Spannungsstabilitätsrandindexes unter Verwendung der Größe der Spannungssignalform, des ermittelten Thevenin-Scheinleitwerts und der Last an dem lokalen Systembus;
Vergleichen des berechneten Spannungsstabilitätsrandindexes mit einem vorgegebenen Schwellwert; und
Verwerten des Vergleichs zwischen dem berechneten Spannungsstabilitätsrandindex mit dem vorgegebenen Schwellwert, um zu bestimmen, ob ein Lastabwurfvorgang eingeleitet werden soll;
**dadurch gekennzeichnet, dass**:

ein Wirkleistungsparameter $p = \dfrac{P_L}{E^2 Y}$ $(4)$ hergeleitet wird, wobei $P_L$ die Wirkleistung ist, die von dem elektrischen System auf die Last übertragen wird, und E die Generatoranschlussspannung des Thevenin-Äquivalents ist,
die partielle Ableitung von $p$ mit Bezug auf $v$ = (V/E) (5) gebildet ist, wobei V die lokale Lastbusspannung ist, um eine normierte maximale Wirkleistung $p_{max}$ (7) zu erhalten,
die maximale aktive Übertragungsleistung als $P_{max} = E^2 Y \cdot p_{max}$ (8) berechnet wird und
der Spannungsstabilitätsrandindex in Form der Wirkleistung $P_{Margin} = P_{max} - P_L$ (9) hergeleitet wird, und/oder
ein Blindleistungsparameter $q = \dfrac{Q_L}{E^2 Y}$ $(2)$ hergeleitet ist, wobei $Q_L$ die Blindleistung ist, die von dem elektrischen System auf die Last übertragen wird,
die partielle Ableitung von $q$ mit Bezug auf $v$ = (V/E) gebildet ist, wobei V die lokale Lastbusspannung wird, um eine normierte maximale Blindleistung $q_{max}$ zu erhalten,
die maximale reaktive Übertragungsleistung als $Q_{max} = E^2 Y \cdot q_{max}$ (8) berechnet wird und
der Spannungsstabilitätsrandindex in Form der Blindleistung $Q_{Margin} = Q_{max} - Q_L$ (10) hergeleitet wird.

2. Verfahren nach Anspruch 2, wobei ein Spannungsstabilitätsrandindex in Form der Scheinleistung $S$ als

$$S_{\text{Margin}} = \sqrt{P_{\max}^2 + Q_{\max}^2} - S_L \qquad (11)$$ hergeleitet wird, wobei $S_L$ die Blindleistung ist, die von dem elektrischen System auf die Last übertragen wird.

3. Verfahren zum Lastabwurf bei Spannungsinstabilität nach Anspruch 1 oder Anspruch 2, wobei der Thevenin-Scheinleitwert auf der Grundlage der Gleichung $\hat{z} = H\hat{x} + \hat{v}$ abgeschätzt ist, wobei $\hat{z}$ ein Messvektor ist, $\hat{x}$ ein Zustandsvektor, der geschätzt werden muss, ist, $H$ ein Beobachtungsmodell ist und $\hat{v}$ ein Beobachtungsrauschen ist.

4. Verfahren zum Lastabwurf bei Spannungsinstabilität nach Anspruch 3, das den Schritt enthält, bei dem der Anfangswert $\hat{x}$ auf der Grundlage einer Leistungsflusslösung gesetzt wird, eine Kovarianzmatrix des Messfehlers R gemäß der Genauigkeit der Messvorrichtung gesetzt wird und der Anfangswert der Kovarianz des Abschätzfehlers P als eine diagonale Matrix mit den Elementwerten gleich 0,000001 gesetzt wird.

5. Verfahren zum Lastabwurf bei Spannungsinstabilität nach Anspruch 3, wobei die Abschätzung des Thevenin-Scheinleitwerts kontinuierlich durchgeführt wird und das Kalman-Filter-Abschätzverfahren ein gleitendes Datenfenster mit vier Abtastwerten pro Fenster verwendet.

6. Verfahren zum Lastabwurf bei Spannungsinstabilität nach Anspruch 3, wobei der Abtastzeitschritt als eine Periode gesetzt ist, die auf 60 Hz beruht.

**7.** Verfahren zum Lastabwurf bei Spannungsinstabilität nach Anspruch 3, wobei die Abtastrate auf der Grundlage des Abschätzwerts des Thevenin-Scheinleitwerts mit ausreichender Zeit, um eine Störung zu detektieren, um die Lastabwurffunktion während der Störung zu blockieren, bestimmt wird.

**8.** Verfahren zum Lastabwurf bei Spannungsinstabilität nach Anspruch 2, wobei der Spannungsstabilitätsrand in Form einer Schein-, einer Wirk- und einer Blindleistung ausgedrückt wird.


**Revendications**

**1.** Procédé de délestage d'instabilité de tension, comprenant les étapes consistant à :

mesurer des formes d'onde de courant et de tension d'un système électrique sur un bus système local ;
estimer l'admittance équivalente de Thevenin (Y) sur la base de techniques de filtrage de Kalman ;
calculer un indice de marge de stabilité de tension utilisant l'amplitude de la forme d'onde de tension, l'admittance de Thevenin déterminée et la charge sur le bus système local ;
comparer l'indice de marge de stabilité de tension calculé à une valeur de seuil prédéterminée ; et
utiliser la comparaison entre l'indice de marge de stabilité de tension calculé et la valeur de seuil prédéterminée afin de déterminer s'il est nécessaire de déclencher une action de délestage ;
caractérisé en ce qui :

un paramètre de puissance réelle $p = \frac{P_L}{E^2 Y}$ $(4)$ est déduit, où $P_L$ est la puissance réelle transférée du système électrique à la charge, E est la tension équivalente de Thevenin aux bornes du générateur, la dérivée partielle de $p$ est calculée par rapport à v =(V/E)(5), où V est la tension locale du bus de charge, afin d'obtenir une puissance réelle maximum normalisée $p_{max}$ (7), la puissance de transfert active maximum est calculée sous la forme $P_{max} = E^2 Y.p_{max}$ (8), et l'indice de marge de stabilité de tension en fonction de la puissance active est déduit sous la forme : $P_{Marge} = P_{max} - P_L$ (9), et/ou

un paramètre de puissance réactive $q = \frac{Q_L}{E^2 Y}$ $(2)$ est déduit, où $Q_L$ est la puissance réactive transférée du système électrique à la charge, la dérivée partielle de $q$ est calculée par rapport à v = (V/E), où V est la tension locale du bus de charge, afin d'obtenir une puissance réactive maximum normalisée $q_{max}$, la puissance de transfert réactive maximum est calculée sous la forme $Q_{max} = E^2 Y. q_{max}$ (8), et l'indice de marge de stabilité de tension en fonction de la puissance réactive est déduit sous la forme : $Q_{Marge} = Q_{max} - Q_L$ (10).

**2.** Procédé selon la revendication 2, dans lequel un indice de marge de stabilité de tension en fonction de la puissance apparente $S$ est déduit sous la forme $S_{Marge} = \sqrt{P_{max}^2 + Q_{max}^2} - S_L$ $(11)$, où $S_L$ est la puissance apparente transférée du système électrique à la charge.

**3.** Procédé de délestage d'instabilité de tension selon la revendication 1 ou la revendication 2, dans lequel l'admittance de Thevenin est estimée sur la base de l'équation suivante :

$\hat{z} = H\hat{x} + \hat{v}$ où $\hat{z}$ est un vecteur de mesure, $\hat{x}$ est un vecteur d'état à estimer, $H$ est un modèle d'observation, $\hat{v}$ est un bruit d'observation.

**4.** Procédé de délestage d'instabilité de tension selon la revendication 3, comprenant l'étape lors de laquelle la valeur initiale $\hat{x}$ est fixée sur la base d'une solution de flux de puissance, d'une matrice de covariance de l'erreur de mesure $R$ fixée conformément à la précision du dispositif de mesure, et à la valeur initiale de la covariance de l'erreur estimée $P$ fixée sous forme d'une matrice diagonale avec une valeur d'élément égale à 0,000001.

**5.** Procédé de délestage d'instabilité de tension selon la revendication 3, dans lequel l'estimation de l'admittance de Thevenin est effectuée en continu et le procédé d'estimation du filtre de Kalman utilise une fenêtre de données glissante comportant quatre échantillons par fenêtre.

**6.** Procédé de délestage d'instabilité de tension selon la revendication 3, dans lequel le pas temporel d'échantillonnage est fixé à un cycle, sur la base de 60 Hz.

**7.** Procédé de délestage d'instabilité de tension selon la revendication 3, dans lequel la fréquence d'échantillonnage est déterminée sur la base de la valeur d'estimation de l'admittance de Thevenin avec un temps suffisant pour détecter un défaut afin de bloquer la fonction de délestage pendant le défaut.

**8.** Procédé de délestage d'instabilité de tension selon la revendication 2, dans lequel la marge de stabilité de tension est exprimée en fonction d'une puissance active et réactive apparente.

Fig. 1

Fig. 2

```
┌─────────────────────────────────────┐
│     Measured Voltage and Current     │
└─────────────────────────────────────┘
                    │
                    ▼
┌─────────────────────────────────────┐
│ Voltage and Current Phasor Calculation │
└─────────────────────────────────────┘
                    │
                    ▼
        ┌─────────────────────────┐
        │ Estimation of Thevenin Equivalent │
        └─────────────────────────┘
```

|   |   |   |   |
|---|---|---|---|
| V | Y | P factor | $P_L$ &$Q_L$ |

```
        ┌─────────────────────┐
        │   Calculation of     │
        │   Pmax & Qmax        │
        └─────────────────────┘
                    │
                    ▼
        ╱─────────────────────────────╲
       ╱  Pmargin/Qmargin/Smargin <ε   ╲
       ╲                               ╱
        ╲─────────────────────────────╱
         YES                      NO
          │                        │
          ▼                        ▼
 ╭──────────────────╮     ╭──────────────────────╮
 │     Action        │     │ Give Margin Information │
 │ (e.g., Load Shedding) │  ╰──────────────────────╯
 ╰──────────────────╯
```

# Fig. 3

13

**EP 1 912 304 B1**

## REFERENCES CITED IN THE DESCRIPTION

### Patent documents cited in the description

- US 6219591 B
- EP 0445713 A
- EP 1217709 A